# DEMANDE DE BREVET EUROPEEN

(11) **EP 1 853 050 A1**
(43) Date de publication de la demande: **07.11.2007**
(21) Numéro de dépôt: 07107199.7
(22) Date de dépôt: 30.04.2007
(51) Int. Cl.: H04L 29/08, H04M 3/523, H04M 3/428, H04M 3/487, H04M 3/493

(54) **Serveur et procede de gestion de file d'attente de sessions**

(30) Priorité: 03.05.2006 FR 0651574
(71) Demandeur: Alcatel Lucent, 75008 Paris (FR)
(72) Inventeur: DAUTUN, Gilles, 94700, MAISON-ALFORT (FR); POUSSIERE, Fabrice, 91300, MASSY (FR)
(74) Mandataire: Chaffraix, Sylvain

(57) **Abrégé**

Un serveur d'application (1) gère une file d'attente d'une pluralité de sessions (S₁,S₂,S₃,Sₙ), chaque session étant initiée par un dispositif de télécommunication client (C₁,C₂,C₃,Cₙ) couplé au serveur d'application (1) par un réseau de télécommunication (TN), chaque dispositif de communication client étant associé à un utilisateur (U₁,U₂,U₃,Uₙ), chaque utilisateur initiant au moyen du dispositif de communication client associé une session pour accéder à un service principal (MS) par l'intermédiaire dudit serveur d'application.
Le serveur d'application (1) comporte des moyens de gestion de sessions (2) couplés au réseau de télécommunication (TN), des moyens de calcul statistique (3) couplés aux moyens de gestion de sessions (2), et des moyens d'accès (4) à des services additionnels couplés aux moyens de gestion de sessions (2). Les moyens d'accès (4) à des services additionnels comportent un module pour coupler le serveur d'application (1) à des entités fournissant des services additionnels (5A,5B,5C). Les moyens de calcul statistique (3) comportent un module pour calculer une information (QI₂,QI₃,QIₙ) relative à un temps d'attente pour chaque session (S₂,S₃,Sₙ). Les moyens de gestion de sessions (2) comportent un module d'enregistrement (2A) de chaque session (S₁,S₂,S₃,Sₙ), un module d'administration (2B) d'une file d'attente des sessions, et un module de mise en relation (2C) pour coupler une session sélectionnée (S₁) avec le service principal (MS) et pour mettre en attente les autres sessions (S₂,S₃,Sₙ). La mise en attente consiste à communiquer à chaque dispositif de télécommunication client (C₂,C₃,Cₙ) l'information (QI₂,QI₃,QIₙ) relative au temps d'attente pour chaque session mises en attente (S₂,S₃,Sₙ) et à interagir avec les utilisateurs (U₂,U₃,Uₙ) des sessions mises en attente pour éventuellement coupler les sessions (S₂,S₃,Sₙ) associées aux services additionnels (5A,5B,5C).

## Description

### DOMAINE TECHNIQUE DE L'INVENTION

L'invention se rapporte au domaine des télécommunications, et plus particulièrement à la gestion de file d'attente d'une pluralité de sessions, chaque session étant initiée par un dispositif de télécommunication client couplée à un serveur d'application par un réseau de télécommunication.

### ETAT DE LA TECHNIQUE ANTERIEURE

Avec le développement des télécommunications et en particulier la convergence entre les télécommunications fixes et mobiles, les utilisateurs de terminaux de télécommunication peuvent échanger toute sorte d'information, par exemple des données, des sons, des images, des vidéos, etc.... Ces données peuvent être échangées entre une personne et une autre personne ou entre une personne et une machine. De nombreux services sont accessibles ou seront accessibles, par exemple des services de renseignements, des services de rappel automatique d'un utilisateur occupé, des services de réservation/commande, des services de consultation médicale, etc....
Le nombre d'utilisateur souhaitant accéder à un service déterminé peut être supérieur à l'offre de service disponible. Dans ce cas, lorsque plusieurs utilisateurs souhaitent accéder au même service, seul un nombre limité d'utilisateur pourra voir sa demande satisfaite. Egalement, dans d'autres cas, un utilisateur ne peut être mis en relation avec un autre utilisateur car celui-ci est déjà en relation avec encore un autre utilisateur ou un service. Il est connu des systèmes procurant un message d'attente et éventuellement une indication du temps d'attente aux utilisateurs pour lesquels la mise en relation avec le service/utilisateur désiré ne peut être immédiatement réalisée.
De tels systèmes sont très simples. Ils se limitent, par exemple, à diffuser une musique et/ou à indiquer un temps d'attente moyen. En particulier, ils ne prennent pas en considération les capacités multimédia des terminaux de télécommunication des utilisateurs.
D'autres systèmes, comme ceux exposées par les demandes de brevet US 2004/0174980, WO 02/096068 ou par le brevet 6,014,439 sont plus évolués et permettent de proposer des services additionnels à l'utilisateur afin de le faire patienter. Mais ces services additionnels sont choisis au sein d'une liste de services préétablie qui ne prend pas en compte la durée d'attente probable de l'utilisateur.

### EXPOSE DE L'INVENTION

Un but de l'invention est de proposer un serveur d'application de gestion de file d'attente remédiant à au moins un des inconvénients de l'art antérieur.

Selon l'invention, le serveur d'application de gestion de file d'attente centralise l'ensemble des sessions initiées par plusieurs utilisateurs souhaitant accéder à un service principal identique, et propose aux utilisateurs des informations concernant le temps d'attente ainsi que des services additionnels disponibles durant le temps d'attente. L'invention trouve une application particulière dans un environnement multimédia utilisant le protocole Internet IMS (pour Internet protocol Multimedia Subsystem). De manière plus précise, l'invention peut être mise en oeuvre par une entité logique utilisant le protocole d'initiation de session SIP (pour Session Initiation Protocol).

Plus précisément, selon un premier aspect, la présente invention concerne un serveur d'application de gestion de file d'attente d'une pluralité de session, chaque session étant initiée par un dispositif de télécommunication client couplé au serveur d'application par un réseau de télécommunication, chaque dispositif de télécommunication client étant associé à un utilisateur initiant au moyen du dispositif de télécommunication client associé une session pour accéder à un service principal par l'intermédiaire dudit serveur d'application.
Le serveur d'application comporte des moyens de gestion de sessions couplés au réseau de télécommunication, des moyens de calcul statistique couplés aux moyens de gestion de sessions, et des moyens d'accès à des services additionnels couplés aux moyens de gestion de sessions.
Les moyens d'accès à des services additionnels comportent un module pour coupler le serveur d'application à des entités fournissant des services additionnels. Les moyens de calcul statistique comportent un module pour calculer une information relative à un temps d'attente pour chaque session.
Les moyens de gestion de sessions peuvent comporter un module d'enregistrement de chaque session, un module d'administration d'une file d'attente des sessions,
Ils comportent un module de mise en relation pour coupler une session sélectionnée avec le service principal et pour mettre en attente les autres sessions dans une file d'attente de sessions.

La mise en attente peut consister à communiquer à chaque dispositif de télécommunication client l'information relative au temps d'attente pour chaque session, notamment celle dont il est initiateur.
Le module de mise en relation est en outre adapté à interagir avec les utilisateurs des sessions mises en attente pour éventuellement coupler les sessions associées aux services additionnels, proposées en fonction de la position de l'utilisateur dans la file d'attente.

Les moyens d'accès à des services additionnels peuvent en outre comporter un module d'accès à des ressources multimédia.
Les moyens de calcul statistique peuvent comporter un module pour déterminer un temps d'attente statistique pour chaque session ou pour calculer un temps d'attente réel pour chaque session.
Le serveur d'application de gestion peut également comporter une base de données couplée aux moyens de gestion de sessions et connectable à un serveur de gestion des données utilisateurs muni d'une base de données comportant des profiles associés à chaque utilisateur.
Le serveur d'application de gestion est réalisé sous la forme d'une entité logique utilisant un protocole d'initiation de session SIP positionné entre une plateforme multimédia utilisant un protocole Internet IMS et un réseau de télécommunication.

Selon un autre aspect, la présente invention concerne un procédé de gestion de file d'attente d'une pluralité de session, chaque session étant initiée par un dispositif de télécommunication client couplé à un serveur d'application par un réseau de télécommunication, chaque dispositif de télécommunication client étant associé à un utilisateur initiant au moyen du dispositif de télécommunication client associé une session pour accéder à un service principal par l'intermédiaire dudit serveur d'application.
Le procédé de gestion comporte plusieurs étapes:
- une étape d'enregistrement de chaque session dans une file d'attente des sessions,
- une étape d'administration de la file d'attente des sessions,
- une étape de calcul statistique déterminant une information relative à un temps d'attente pour chaque session, une étape de mise en relation pour coupler une session sélectionnée avec le service principal,
- une étape de mise en attente des autres sessions, la mise en attente pouvant consister à communiquer à chaque dispositif de télécommunication client l'information relative au temps d'attente et consistant à interagir avec les utilisateurs des sessions mises en attente pour proposer des services additionnels en fonction de la position de l'utilisateur dans la file d'attente ; et
- une étape de couplage éventuel des sessions mises en attente avec les services additionnels en fonction des choix des utilisateurs.

L'étape de calcul statistique peut comporter la détermination d'un temps d'attente statistiquement estimé pour chaque session ou le calcul d'un temps d'attente réel pour chaque session.
Le procédé peut en outre comporter une étape de téléchargement des profiles associés à chaque utilisateur contenus dans une base de données d'un serveur de gestion des données utilisateurs et une étape de détermination des services additionnels proposés aux utilisateurs en fonction de leurs profils respectifs.
Avantageusement, l'étape d'administration de la file d'attente des sessions consiste à positionner les sessions dans la file d'attente selon un niveau de priorité associé à chaque session et selon un numéro d'ordre associé à chaque session lors de l'étape d'enregistrement.
Avantageusement, au moins les étapes nécessitant une interaction avec des dispositifs de télécommunication via le réseau de télécommunication sont conformes au protocole d'initiation de session SIP.

Selon encore un autre aspect, la présente invention concerne un produit programme d'ordinateur destiné à être chargé dans une mémoire d'un serveur d'application de gestion de file d'attente, le produit programme d'ordinateur comportant des portions de code de logiciel mettant en oeuvre le procédé de gestion de file d'attente selon l'invention lorsque le programme est exécuté par le serveur d'application de gestion de file d'attente.

La présente invention permet l'accès des utilisateurs à un service principal et éventuellement à des services additionnels indépendamment du dispositif de télécommunication client utilisé, i.e. terminal de communication fixe ou mobile. Les capacités multimédia des dispositifs de télécommunication clients sont pleinement utilisées grâce à l'invention.

L'invention permet d'administrer efficacement les sessions des utilisateurs en attente aux bénéfices des utilisateurs et des fournisseurs de services. Du point de vue de l'utilisateur en attente, elle permet notamment d'offrir l'accès à des services additionnels, et des informations fiables en ce qui concerne le temps d'attente. L'invention permet donc de rendre plus supportable le temps d'attente. Du point de vue du fournisseur de services, elle permet d'offrir un service client de qualité, éventuellement d'optimiser en amont la fourniture du service le plus adapté à la demande de l'utilisateur et potentiellement de générer des revenus supplémentaires par l'intermédiaire des services additionnels.
L'invention permet de gérer de manière simple et performante des sessions prioritaires.

### DESCRIPTION DES FIGURES

La présente invention est illustrée par des exemples non limitatifs sur les Figures jointes, dans lesquelles des références identiques indiquent des éléments similaires:
La Figure 1 illustre schématiquement un exemple de mise en oeuvre d'un serveur d'application selon l'invention dans une application de type médicale ;
La Figure 2 illustre schématiquement les différents éléments d'un serveur d'application selon une première alternative de l'invention ; et
La Figure 3 illustre schématiquement les différents éléments d'un serveur d'application selon une seconde alternative de l'invention.

### DESCRIPTION DETAILLEE DE L'INVENTION

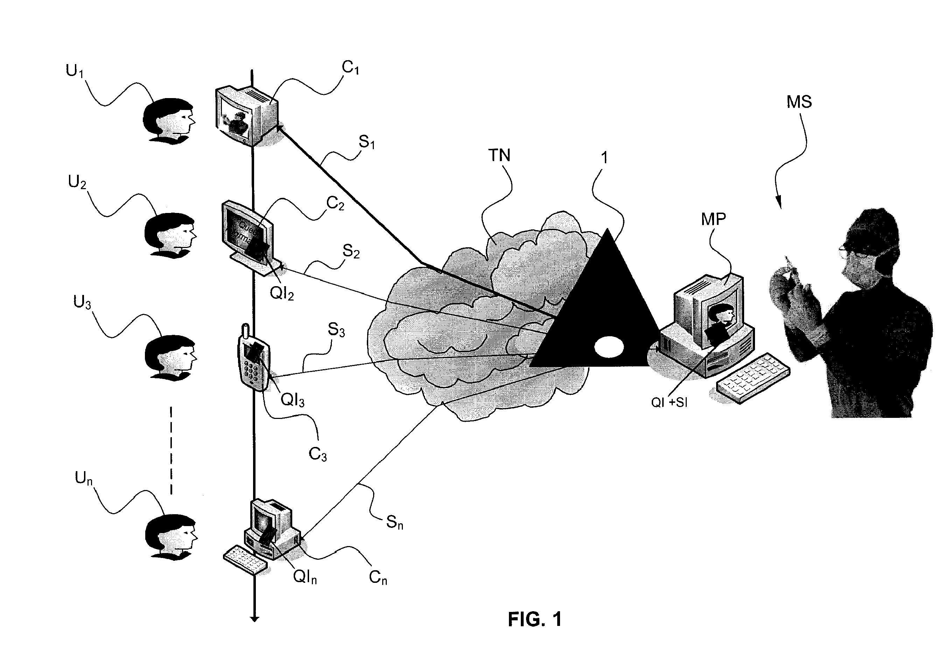

La Figure 1 représente de manière schématique un exemple d'application dans un contexte médical d'un serveur d'application selon l'invention.
Dans cet exemple, une pluralité d'utilisateur U₁, U₂, U₃, Uₙ souhaitent accéder à un service principal MS, par exemple un service de consultation médicale à distance. Les utilisateurs U₁, U₂, U₃, Uₙ peuvent être des patients. Le service principal MS de consultation médicale à distance est assuré par un médecin. Alternativement, les utilisateurs U₁, U₂, U₃, Uₙ peuvent être des médecins généralistes souhaitant être mis en relation à distance avec un médecin spécialisé.
Les utilisateurs U₁, U₂, U₃, Uₙ sont munis de dispositifs de télécommunication clients C₁, C₂, C₃, Cₙ, respectivement. Les dispositifs de télécommunication clients C₁, C₂, C₃, Cₙ ainsi que celui dont dispose le médecin sont des terminaux multimédias munis d'interfaces adaptées (modems, cartes réseaux, Bluetooth ou WiFi, etc...) pour se connecter à un réseau de télécommunication TN. A titre d'exemple, le réseau de télécommunication TN est le réseau Internet. Les terminaux ainsi que les réseaux utilisent des technologies bien connues, lesquelles ne seront pas décrites plus en détail. Un premier U₁ et un second U₂ utilisateur dispose chacun d'un récepteur de télévision interactif C₁, C₂ connecté au réseau de télécommunication TN. Le troisième utilisateur U₃ dispose d'un téléphone portable C₃ ou d'un ordinateur portable C₃ pouvant être connecté au réseau de télécommunication TN. Le nième utilisateur Uₙ dispose d'un ordinateur fixe Cₙ connectable au réseau de télécommunication TN. Avantageusement, tous les dispositifs de télécommunication sont munis de caméras, par exemple de webcam et de microphones, afin de faciliter l'interaction entre l'utilisateur et le médecin. Chaque utilisateur U₁, U₂, U₃, Uₙ peut initier, par l'intermédiaire du dispositif de télécommunication dont il dispose, une session S₁, S₂, S₃, Sₙ respectivement. L'initiation d'une telle session S₁, S₂, S₃, Sₙ a pour but d'accéder au service principal MS. L'ensemble des utilisateurs U₁, U₂, U₃, Uₙ ne pouvant accéder simultanément au service principal MS, un serveur d'application 1 est prévu afin de gérer une file d'attente de la pluralité de session S₁, S₂, S₃, Sₙ.
Avantageusement, le serveur d'application de gestion 1 est positionné entre une plateforme multimédia MP utilisant un protocole Internet (connu sous la dénomination IMS pour Internet protocol Multimedia Subsystem) et le réseau de télécommunication TN. Le serveur d'application de gestion 1 comporte une entité logique (connu sous la dénomination B2BUA pour Back-to-Back User Agent) utilisant un protocole d'initiation de session (connu sous la dénomination SIP pour Session Initiation Protocol). Ce type d'entités et de protocoles sont bien connus dans le domaine des télécommunications et des réseaux (référence est faite au site web de l'IETF pour "The Internet Engineering Task Force" www.ietf.org) et ne seront pas décrits de manière plus détaillée.

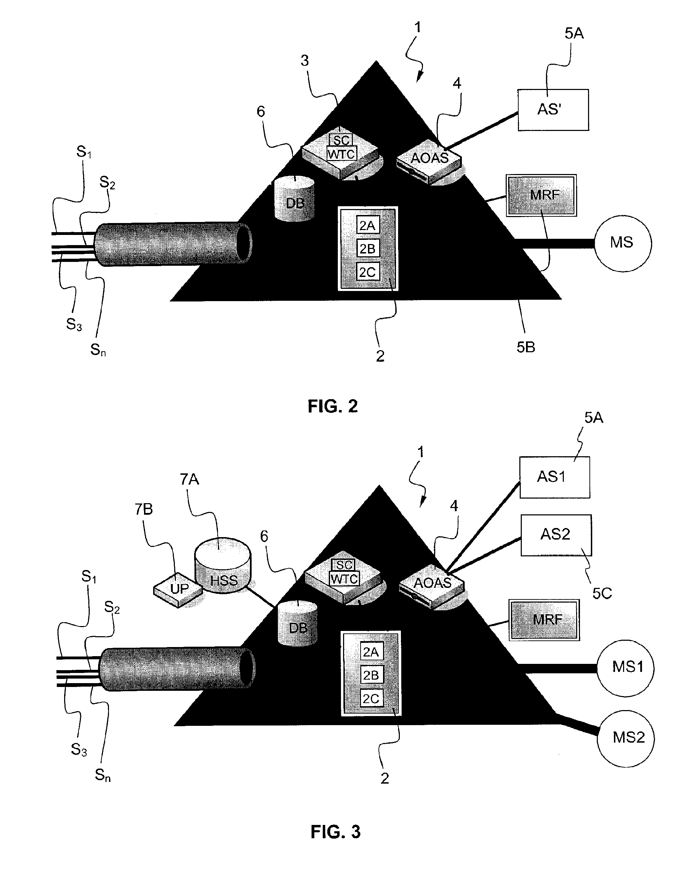

La Figure 2 illustre schématiquement, d'une manière détaillée, le serveur d'application 1 représenté à la Figure 1, selon une première alternative.
Le serveur d'application comporte des moyens de gestion de sessions 2, des moyens de calcul statistique 3, des moyens d'accès à des services additionnels 4 et une base de donnée 6. Les moyens de gestion de sessions 2 sont couplés au réseau de télécommunication TN, aux moyens de calcul statistique 3, aux moyens d'accès à des services additionnels 4 et à la base de donnée 6. Les moyens de gestion de sessions 2 mettent en relation une session sélectionnée avec le service principal MS.

Les moyens d'accès à des services additionnels comportent un module 4 pour coupler le serveur d'application 1 à une ou plusieurs entités 5A fournissant des services additionnels. L'entité 5A peut être par exemple un serveur d'application dédié. À titre d'exemple, le serveur d'application dédié 5A peut fournir des services additionnels tels que des publicités, de la musique, des vidéos, des jeux, ou des informations sur le service, etc..... Alternativement, les moyens d'accès à des services additionnels peuvent être confondus avec les moyens de gestion de sessions 2. Dans ce contexte, les moyens d'accès à des services additionnels comportent un module pour coupler le serveur d'application 1 à des ressources multimédia 5B. Les ressources multimédia 5B fournissent des services additionnels. Les ressources multimédia font partie intégrante de l'environnement IMS et permettent le traitement des services multimédias (connus sous la dénomination MRF pour "Multimedia Ressource Function" définis dans les normes 3GPP). Par exemple, les ressources multimédia permettent la diffusion de différentes tonalités, de messages, de vidéo, etc.... Il est également envisageable que les services additionnels soient directement liés au service principal. Par exemple, lors d'une consultation médicale, l'utilisateur pourrait être amené à remplir un questionnaire avec des questions d'ordre médicales ou d'ordre administratives. De ce fait, le temps d'attente peut être utilement exploité afin d'optimiser la délivrance sur service principal.

Les moyens de calcul statistique 3 comportent un module pour calculer une information relative à un temps d'attente pour chaque session. Les moyens de calcul statistique 3 peuvent comporter un premier module SC pour déterminer un temps d'attente statistique pour chaque session. Ils peuvent également comporter un second module WTC pour calculer un temps d'attente réel pour chaque session. Le premier module SC peut également créer des statistiques en relation avec les sessions, dont les résultats seront stockés dans la base de données 6 afin d'affiner des calculs ultérieurs.

La base de données 6 est couplée aux moyens de gestion de sessions 2 et aux moyens de calcul statistique 3. Différentes données sont mémorisées dans la base de données. Par exemple, il peut s'agir d'information relative au service principal et aux services additionnels disponibles. Il peut également s'agir de documents administratifs relatifs au service principal. La base de données peut également contenir des informations relatives aux utilisateurs, par exemple des données relatives aux dernières consultations, les dossiers médicaux, etc....

Les moyens de gestion de sessions 2 comportent un module d'enregistrement 2A, un module d'administration 2B et un module de mise en relation 2C.
Le module d'enregistrement 2A est destiné à centraliser l'enregistrement de chaque session. En particulier, le module d'enregistrement affecte un numéro d'ordre à chaque session.
Le module d'administration 2B est destiné à administrer une file d'attente des sessions. Avantageusement, le module d'administration gère les priorités. À titre d'exemple, des niveaux de priorités peuvent être définis en fonction de l'importance ou de la gravité des symptômes affectant l'utilisateur. Le module d'administration de la file d'attente des sessions positionne les sessions dans la file d'attente selon un niveau de priorité associé à chaque session et selon le numéro d'ordre associé à chaque session lors de l'étape d'enregistrement.
Le module d'administration communique à chacun des utilisateurs mis en attente U₂, U₃, Uₙ, sa position dans la file d'attente Q₂, Q₃, Qₙ, respectivement (voir Figure 1). Le module d'administration communique également au fournisseur de service principal (i.e. le médecin dans le présent exemple) des informations sur le positionnement QI des utilisateurs mis en attente dans la liste d'attente et des informations sur la session SI en court. Ces informations qui sont modifiées en temps réel par les moyens de gestion de sessions 2 sont stockées dans la base de données 6. De cette façon, les moyens de gestion de sessions 2 comme les moyens de calcul statistique 3 peuvent utiliser des informations fiables à tout instant.
Le module de mise en relation 2C est destiné à coupler une session sélectionnée avec le service principal, et à mettre en attente les autres sessions.
Les moyens de gestion de sessions 2 sont réalisés sous la forme d'une entité logique B2BUA utilisant le protocole d'initiation de session SIP. Cette entité logique peut recevoir et traiter des messages de requête provenant des dispositifs de télécommunication clients C₁, C₂, C₃, Cₙ en jouant le rôle d'un serveur SIP (connu sous la dénomination UAS pour User Agent Server). Cette entité logique peut déterminer comment répondre aux messages de requête et comment établir des connections avec l'extérieur en jouant le rôle d'un client SIP (connu sous la dénomination UAC pour User Agent Client). De cette manière, les moyens de gestion de sessions 2 peuvent retourner aux utilisateurs des informations concernant leurs positions dans la file d'attente, le temps d'attente avant de pouvoir accéder au service principal et proposer l'accès à des services additionnels. Avantageusement, les services additionnels sont proposés en fonction de la position de l'utilisateur dans la file d'attente. À titre d'exemple, des services additionnels peuvent être d'écouter de la musique, de visionner un film ou de consulter des informations à propos du service principal ou des services additionnels. Avantageusement, les utilisateurs pourront accéder à ces services additionnels tout en conservant leurs positions respectives dans la file d'attente.

La mise en attente consiste à communiquer à chaque dispositif de télécommunication client un message comportant l'information relative au temps d'attente pour chaque session. En outre, une interaction avec les utilisateurs des sessions mises en attente permet éventuellement, c'est à dire selon le choix de chaque utilisateur de coupler les sessions associées aux services additionnels. Cette interaction est réalisée sous la forme d'échange de messages entre le serveur de gestion et des dispositifs de télécommunication clients. Le serveur de gestion propose via les moyens de gestion de sessions des informations relatives aux services additionnels, lesquelles sont indiquées sur les dispositifs de télécommunications clients. Lorsqu'un utilisateur en attente a fait son choix, un message est envoyé par le dispositif de télécommunication client concerné en direction du serveur de gestion. Le serveur de gestion couple alors la session associée mise en attente avec les services additionnels par l'intermédiaire des moyens d'accès à des services additionnels.

En outre, basé sur l'information relative au temps d'attente pour une session déterminée fournie par les moyens de calcul statistique 3, les moyens de gestion de sessions peuvent envoyer un message invitant l'utilisateur concerné à décaler sa demande d'accès au service principal. Par exemple, les moyens de gestion de sessions 2 peuvent proposer une autre heure ou un autre jour correspondant à un temps d'attente moyen statistiquement moins long. Il peut également être envisagé une interaction entre des modules de gestion d'agenda présents sur le dispositif de télécommunication client de l'utilisateur est celui dont dispose le médecin afin de fixer un rendez-vous.

Avec l'invention, il est possible de transmettre à tous les utilisateurs en temps réel des informations relatives à la file d'attente, par exemple leurs positions respectives dans la file d'attente, des statistiques ou des estimations de temps d'attente. Également, les utilisateurs peuvent, tout en conservant leurs positions dans la file d'attente, accéder à des services additionnels qui leurs sont proposés.

Dans l'application médicale présentée à la Figure 1, plusieurs personnes U₁, U₂, U₃, Uₙ souhaitent accéder à un service de consultation médicale en temps réel MS, c'est à dire à consulter un médecin à distance. Les utilisateurs U₁, U₂, U₃, Uₙ se connectent à ce service de consultation médicale en s'enregistrant auprès du serveur d'application 1. Le serveur d'application les met automatiquement dans un mode d'attente. Le premier utilisateur U₁ est mis en relation avec le service de consultation médicale, en d'autres termes le médecin consulte le premier utilisateur. Les autres utilisateurs U₂, U₃ et Uₙ sont mis en attente et informés de leurs positions Q₂, Q₃, Qₙ respectives dans la file d'attente. De manière concomitante, une information relative aux temps d'attente est calculée pour chaque utilisateur mis en attente. Pendant le temps d'attente, les utilisateurs accédant à des services additionnels proposés par le serveur de gestion conservent leurs positions dans la file d'attente. Avantageusement, les utilisateurs comme le médecin peuvent consulter à tout moment les informations relatives à la file d'attente QI+SL, par exemple le nombre d'utilisateurs dans la file d'attente, le temps d'attente réel ou des informations statistiques relatives aux temps d'attente.

La Figure 3 illustre schématiquement une seconde alternative du serveur d'application 1 représenté à la Figure 1.
La seconde alternative diffère de la première alternative en ce que plusieurs services principaux MS1 et MS2 et plusieurs services additionnels AS1 et AS2 sont disponibles, et en ce que la base de données 6 peut être enrichie par des données utilisateurs extérieures supplémentaires.
Le module 4 des moyens d'accès à des services additionnels permet de coupler le serveur d'application 1 à deux entités 5A et 5C fournissant des services additionnels. Les entités 5A et 5C sont par exemple des serveurs d'application dédiés à la fourniture de services additionnels spécifiques tels que ceux déjà mentionnés ci-dessus.
La base de données 6 couplée aux moyens de gestion de sessions 2 peut être connectée à un serveur de gestion des données utilisateurs 7A. Le serveur de gestion des données utilisateurs 7A (connu sous la dénomination HSS pour Home Subscriber Server) comporte une base de données 7B contenant des profiles utilisateurs associés à chaque utilisateur se connectant au réseau de télécommunication TN. Les profils utilisateurs peuvent être téléchargés et sont utilisés pour obtenir des informations personnelles concernant les utilisateurs. Ces informations personnelles peuvent alors être utilisées par les moyens de gestion de sessions 2 pour déterminer et proposer à chaque utilisateur des services additionnels en fonction de leurs profiles respectifs, c'est à dire adaptés à leurs préférences.

Dans la description qui précède, les différents éléments constituant le serveur de gestion de file d'attente ont été présentés comme une pluralité de moyens, de modules ou d'entités logiques ayant des fonctions déterminées. Ceux-ci peuvent être réalisés sous forme de circuits électroniques. Néanmoins, il est évident pour un homme du métier que l'invention peut également être réalisée sous la forme d'un produit programme d'ordinateur destiné à être chargé dans une mémoire d'un serveur d'application, le produit programme d'ordinateur comportant des portions de code de logiciel mettant en oeuvre l'invention lorsque le programme est exécuté par le serveur d'application. L'invention peut également être réalisée en partie par des circuits électroniques et en partie par des portions de code de logiciel.

Les figures et leurs descriptions faites ci-dessus illustrent l'invention plutôt qu'elles ne la limitent. En particulier, l'invention et ses différentes variantes viennent d'être décrites en relation avec un exemple particulier de consultation médicale à distance comme service principal. Néanmoins, il est évident pour un homme du métier que l'invention peut être étendue, d'une manière identique ou similaire, à bien d'autres services principaux comme par exemple une "hot line" d'un opérateur de service de télécommunication ou d'un vendeur à distance de biens de consommation, etc....

Les signes de références dans les revendications n'ont aucun caractère limitatif. Les verbes "comprendre" et "comporter" n'excluent pas la présence d'autres éléments que ceux listés dans les revendications. Le mot "un" précédant un élément n'exclut pas la présence d'une pluralité de tels éléments.

## Revendications

1. Un serveur d'application de gestion de file d'attente (1) d'une pluralité de session (S₁, S₂, S₃, Sₙ), chaque session étant initiée par un dispositif de télécommunication client (C₁, C₂, C₃, Cₙ) couplé au serveur d'application (1) par un réseau de télécommunication (TN), chaque dispositif de télécommunication client étant associé à un utilisateur (U₁, U₂, U₃, Uₙ) initiant au moyen du dispositif de télécommunication client associé une session pour accéder à un service principal (MS) par l'intermédiaire dudit serveur d'application, ledit serveur d'application (1) est **caractérisé en ce qu'**il comporte:
- des moyens de gestion de sessions (2) couplés au réseau de télécommunication (TN),
- des moyens de calcul statistique (3) couplés aux moyens de gestion de sessions (2), et
- des moyens d'accès (4) à des services additionnels couplés aux moyens de gestion de sessions (2), et **en ce que**:
- les moyens d'accès (4) à des services additionnels comportent un module pour coupler le serveur d'application (1) à des entités fournissant des services additionnels (5A, 5B, 5C),
- les moyens de calcul statistique (3) comportent un module pour calculer une information (Ql₂, Ql₃, Qlₙ) relative à un temps d'attente pour chaque session (S₂, S₃, Sₙ), et
- les moyens de gestion de sessions (2) comportent un module de mise en relation (2C) pour coupler une session sélectionnée (S₁) avec le service principal (MS), pour mettre en attente les autres sessions (S₂, S₃, Sₙ) au sein d'une file d'attente, et pour interagir avec les utilisateurs (U₂, U₃, Uₙ) des sessions mises en attente pour éventuellement coupler lesdites sessions (S₂, S₃, Sₙ) mises en attente à des services additionnels (5A, 5B, 5C) proposés en fonction de la position desdits utilisateurs dans ladite file d'attente.

2. Serveur d'application de gestion selon la revendication 1, dans lequel lesdits moyens de gestion de session comportent en outre un module d'enregistrement (2A)

3. Serveur d'application de gestion selon la revendication 1 ou 2, dans lequel lesdits moyens de gestion de session comportent en outre un module d'administration de la file d'attente de sessions

4. Serveur d'application de gestion selon l'une des revendications précédentes, dans lequel la mise en attente consiste à communiquer à chaque dispositif de télécommunication client (C₂, C₃ Cₙ) l'information (Ql₂, Ql₃, Qlₙ) relative au temps d'attente pour chaque session qu'il a initié.

5. Serveur d'application de gestion selon l'une des revendications précédentes, dans lequel la mise en attente consiste à communiquer à chaque dispositif de télécommunication client (C₂, C₃ Cₙ) l'information (Ql₂, Ql₃, Qlₙ) relative au temps d'attente pour chaque session mise en attente (S₂, S₃, Sₙ)..

6. Le serveur d'application de gestion selon l'une des revendications précédentes, dans lequel les moyens d'accès (4) à des services additionnels comportent en outre un module d'accès à des ressources multimédia (5B).

7. Le serveur d'application de gestion selon l'une des revendications précédentes, dans lequel les moyens de calcul statistique (3) comportent un module pour déterminer un temps d'attente statistique pour chaque session ou pour calculer un temps d'attente réel pour chaque session.

8. Le serveur d'application de gestion selon l'une des revendications précédentes, dans lequel le serveur d'application de gestion (1) comporte en outre une base de données (6) couplée aux moyens de gestion de sessions (2) et connectable à un serveur de gestion des données utilisateurs (7A) muni d'une autre base de données (7B) comportant des profiles associés à chaque utilisateur (U₁, U₂, U₃, Uₙ).

9. Le serveur d'application de gestion selon l'une des revendications précédentes, dans lequel le serveur d'application de gestion (1) est réalisé sous la forme d'une entité logique utilisant un protocole d'initiation de session SIP positionné entre une plateforme multimédia (MP) utilisant un protocole Internet IMS (MP) et le réseau de télécommunication (TN).

10. Un procédé de gestion de file d'attente d'une pluralité de session, chaque session (S₁, S₂, S₃, Sₙ) étant initiée par un dispositif de télécommunication client (C₁, C₂, C₃, Cₙ) couplé à un serveur d'application (1) par un réseau de télécommunication (TN), chaque dispositif de télécommunication client étant associé à un utilisateur initiant au moyen du dispositif de télécommunication client associé une session pour accéder à un service principal (MS) par l'intermédiaire dudit serveur d'application, ledit procédé de gestion est **caractérisé en ce qu'**il comporte les étapes suivantes:
- une étape d'enregistrement de chaque session (S₁, S₂, S₃, Sₙ) dans une file d'attente des sessions,
- une étape d'administration de la file d'attente des sessions,
- une étape de calcul statistique déterminant une information (Ql₂, Ql₃, Qlₙ) relative à un temps d'attente pour chaque session (S₂, S₃, Sₙ),
- une étape de mise en relation pour coupler une session sélectionnée (S₁) avec le service principal (MS),
- une étape de mise en attente des autres sessions (S₂, S₃, Sₙ) dans une file d'attente de sessions, et d'interaction avec les utilisateurs des sessions mises en attente pour proposer des services additionnels en fonction de la position de l'utilisateur dans ladite file d'attente, et
- une étape de couplage éventuel des sessions mises en attente (S₂, S₃, Sₙ) avec les services additionnels en fonction des choix des utilisateurs.

11. Le procédé de gestion selon la revendication 10 dans lequel la mise en attente consistant à communiquer à chaque dispositif de télécommunication client (C₂, C₃, Cₙ) l'information relative au temps d'attente

12. Le procédé de gestion selon la revendication 10 ou 11, dans lequel l'étape de calcul statistique comporte la détermination d'un temps d'attente statistiquement estimé pour chaque session ou le calcul d'un temps d'attente réel pour chaque session.

13. Le procédé de gestion selon l'une des revendications 10 à 12, dans lequel le procédé comporte en outre une étape de téléchargement des profiles associés à chaque utilisateur contenus dans une base de données (7B) d'un serveur de gestion des données utilisateurs (7A) et une étape de détermination des services additionnels proposés aux utilisateurs en fonction de leurs profiles respectifs.

14. Le procédé de gestion selon l'une des revendications 10 à 13, dans lequel l'étape d'administration de la file d'attente des sessions consiste à positionner les sessions dans la file d'attente selon un niveau de priorité associé à chaque session et selon un numéro d'ordre associé à chaque session lors de l'étape d'enregistrement.

15. Le procédé de gestion selon l'une des revendications 10 à 14, dans lequel au moins les étapes nécessitant une interaction avec des dispositifs de télécommunication (C₁, C₂, C₃, Cₙ) via le réseau de télécommunication (TN) sont conformes au protocole d'initiation de session SIP.

16. Un produit programme d'ordinateur destiné à être chargé dans une mémoire d'un serveur d'application de gestion de file d'attente (1), le produit programme d'ordinateur comportant des portions de code de logiciel mettant en oeuvre le procédé de gestion selon l'une des revendications 10 à 15 lorsque le programme est exécuté par le serveur d'application de gestion de file d'attente (1).
